# FASCICULE DE BREVET EUROPEEN

(11) **EP 2 020 734 B1**
(45) Date de publication et mention de la délivrance du brevet: **08.08.2012**
(21) Numéro de dépôt: 08159656.1
(22) Date de dépôt: 03.07.2008
(51) Int. Cl.: H02K 5/10, H02K 5/22

(54) **Capot de protection destiné à être fixé par encliquetage sur un flasque d'une machine électrique tournante et machine électrique tournante comportant un tel capot**
Schutzabdeckung zum Befestigen durch Einschnappen auf einem Flansch einer elektrischen umlaufenden Maschine und elektrische umlaufende Maschine, die eine solche Abdeckung umfasst
Protective cover designed to be attached by snap fitting to a flange of a rotating electric machine and rotating electric machine comprising such a cover

(30) Priorité: 30.07.2007 FR 0756797
(43) Date de publication de la demande: 04.02.2009
(73) Titulaire: Valeo Equipements Electriques Moteur, 94046 Créteil Cedex (FR)
(72) Inventeur: Lebas, Jean, 62170, LA CALOTERIE (FR); Ganier, Paul, 62360, Pont de Briques (FR); Pouchelle, Benjamin, 62630, ETAPLES (FR)
(74) Mandataire: Gamonal, Didier

(56) Documents cités:
- EP-A- 1 107 431
- EP-A- 1 551 092
- WO-A-01/69762
- DE-A1- 3 305 645
- DE-A1- 19 630 249
- FR-A- 2 496 353
- FR-A- 2 532 379
- FR-A- 2 743 213
- US-A1- 2006 181 167

## Description

### Domaine de l'invention

La présente invention concerne un capot de protection destiné à être fixé par encliquetage sur un flasque d'une machine électrique tournante et une machine électrique tournante comportant un tel capot.

### Etat de la technique

Un tel capot et une telle machine électrique tournante sont décrits par exemple dans le document WO 01/69762conforme au préambule de la revendication 1.
Dans ce document la machine est un alternateur réversible pour véhicule automobile à moteur thermique. Cet alternateur réversible est appelé alterno-démarreur.
Cet alterno-démarreur transforme de l'énergie mécanique en énergie électrique lorsqu'il travaille en mode générateur de courant pour notamment recharger la batterie et/ou alimenter les consommateurs du réseau de bord du véhicule.
Cet alterno-démarreur transforme de l'énergie électrique en énergie mécanique lorsqu'il travaille en mode moteur électrique pour notamment démarrer le moteur thermique du véhicule.
Pour plus de précisions on se reportera à ce document WO 01/69762.

Comme visible dans les figures 1 et 7 de ce document, le capot entoure et protège le porte -balais et le porte-capteurs de l'alterno-démarreur ; sachant que les balais du porte- balais sont destinés à frotter sur des bagues collectrices solidaires de l'extrémité arrière de l'arbre de l'alterno-démarreur.
Cet arbre est solidaire du rotor, tel qu'un rotor à griffes, de l'alterno-démarreur.
Ce rotor est entouré par un stator porté intérieurement par un carter comportant au moins deux flasques appelés respectivement palier arrière et palier avant.

Ces paliers portent centralement un moyen de palier, tel qu'un roulement à billes pour montage rotatif de l'arbre de l'alterno-démarreur. Cet arbre traverse les paliers pour porter les bagues collectrices à son extrémité arrière de plus petit diamètre et à son extrémité avant un organe d'entraînement, tel qu'une poulie, appartenant à une transmission de mouvement intervenant entre le vilebrequin du moteur thermique et l'arbre de l'alterno-démarreur.

En variante, s'agissant d'un simple alternateur fonctionnant en mode générateur de courant, le capot entoure le porte- balais et également un pont redresseur de courant ainsi qu'un régulateur de tension solidaire du porte-balais comme décrit par exemple dans le document US 7 019 424.
Dans ce cas le capot présente une ouverture pour le passage d'un connecteur raccordé au régulateur de tension et une autre ouverture pour le passage d'une borne, dite borne B+ , destinée à être raccordée via un câble à la borne positive de la batterie. Cette borne est solidaire du radiateur positif que comporte le pont redresseur de courant.
Pour plus de précisions on se reportera à ce document US 7 019 424 ou au document US 6 798 094, sachant que l'ouverture de passage de la borne B+ peut être, en fonction des applications, radiale, comme visible à la figure 8 de ce document US 7 019 424, ou en variante axiale, comme visible à la figure 18 du document US 6 978 094.

Dans ces documents WO 01/69762, US 7 019 424 et US 6 798 094 le capot est de forme creuse et est ajouré pour passage d'un flux d'air de refroidissement respectivement de l'alterno-démarreur et de l'alternateur. Cette circulation d'air de refroidissement est engendrée par la rotation d'au moins un ventilateur arrière solidaire du rotor de l'alterno-démarreur ou de l'alternateur.
Dans ces documents le capot est solidaire du flasque constitué par le palier arrière de l'alternateur ou de l'alterno-démarreur.
On tire partie du fond du capot pour sa fixation sur l'un des flasques du carter de l'alterno-démarreur ou de l'alternateur, ici le palier arrière.
Plus précisément le capot est fixé via des languettes d'encliquetage déformables, solidaires du fond du capot, par encliquetage sur des organes filetées, tels que des goujons, solidaires du palier arrière en sorte qu'il présente un fond, globalement d'orientation transversale par rapport à l'axe de l'arbre de l'alterno-démarreur ou de l'alternateur, et un rebord globalement d'orientation axiale par rapport à cet axe comme visible par exemple dans la figure 7 du document WO 01/69762 et à la figure 8 du document US 7 019 424 ; dans laquelle on n'a pas représenté par simplicité les goujons

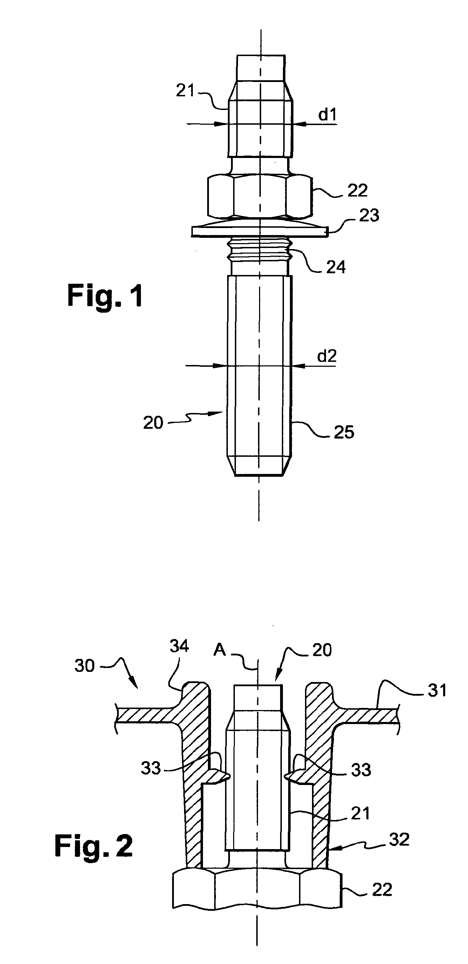

Un tel goujon est représenté à la figure 1.
Ce goujon 20 comporte une première partie filetée 21 de diamètre d1, un écrou 22, une rondelle 23, une partie 24 à anneaux et une deuxième partie filetée 25 de diamètre d2 avantageusement égale au diamètre d1.
Les parties 21 et 25, l'écrou 22 et les anneaux 24 sont monoblocs. La rondelle 23 est imperdable grâce aux anneaux de retenue 24.
La deuxième partie filetée 25 est destinée à se visser dans un plot taraudé issue du fond du palier arrière comme visible dans la figure 7 du document US 6 798 094 et dans les figures 7 et 12 du document WO 01/69762.
Ce vissage est réalisé par l'intermédiaire de l'écrou 23 manoeuvré par un outil. La rondelle 23, ici conique à arrête sans bavure, est destinée à venir en appui par exemple sur les oreilles du porte-capteurs de la figure 9 du document WO 01/69762 ; la deuxième partie filetée 25 traversant le trou de forme oblongue de ladite oreille. L'écrou 22, manoeuvré par l'outil, permet de serrer l'oreille concernée du porte capteurs entre le plot du palier arrière et la rondelle 23.
En variante l'écrou permet de serrer le radiateur positif et le connecteur du document US 6 798 094 entre le plot du palier arrière, dans lequel se visse la partie 25, et la rondelle 23. Pour ce faire il faut prévoir une pièce électriquement isolante, appelée canon isolant, pour éviter tout court-circuit. Ce canon présente une partie supérieure en forme d'un premier manchon prolongée par un deuxième manchon de plus diamètre traversant un trou du radiateur positif du pont redresseur de courant. Il est constitué une rondelle à la faveur du changement de diamètre entre les deux manchons. La rondelle du canon est intercalée entre la rondelle 23 du goujon 20 et le bord du trou du radiateur positif du pont redresseur de courant. La partie filetée 25 traverse le deuxième manchon du canon pour se visser dans le trou taraudé du plot du palier arrière.

Les anneaux 24 sont destinés à pénétrer dans le deuxième manchon du canon isolant, tandis que le premier manchon sert au logement de l'écrou et de la rondelle 23.

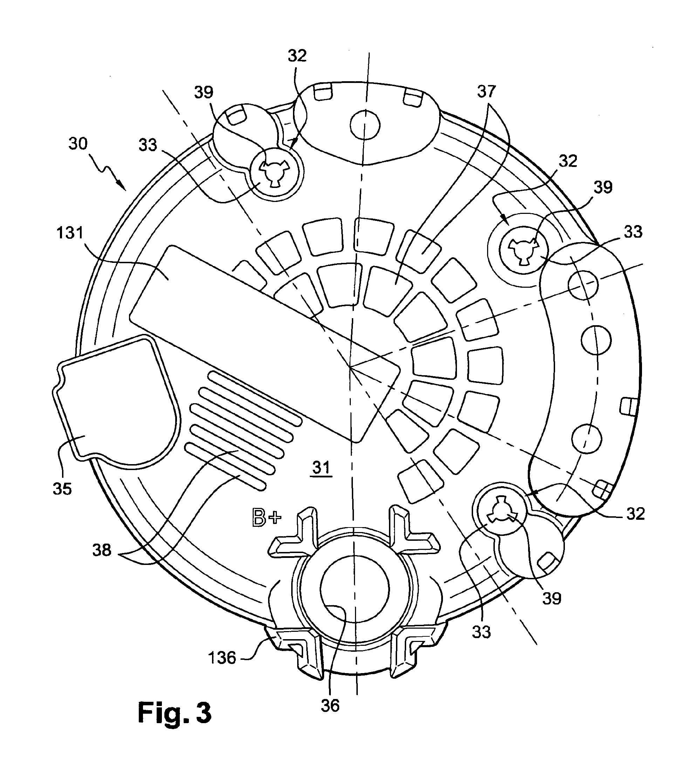

Comme visible à la figure 2, qui est une vue partielle des figures 7 et 12 du document WO 01/69762, la première partie filetée 21 est destinée à venir en prise avec des languettes élastiquement déformables 33 appartenant à une cheminée 32 d'assemblage globalement cylindrique et solidaire du fond 31 du capot 30. Cette cheminée 32, plus précisément la paroi de la cheminée définissant celle-ci, s'étend ici perpendiculairement au fond 31.
La cheminée 32 est obtenu par moulage avec le capot, par exemple en matière plastique. Cette cheminée 32 présente une paroi
L'axe de la cheminée 32 est confondu avec l'axe A du goujon 20. Les languettes 33 s'étendent à l'intérieur de la cheminée 32 et ce perpendiculairement à l'axe A.
Cette cheminée 32 pénètre localement à l'intérieur du capot 30 et s'appuie à sa base sur l'écrou 22 du goujon 20. La tête 34 de la cheminée forme un anneau de rigidification, qui s'étend en saillie axiale vers l'extérieur par rapport au fond 31 du capot 30. L'anneau 34 est d'orientation axiale par rapport à l'axe A du goujon, tandis que les languettes 33 sont d'orientation radiale par rapport à cet axe A, constituant également l'axe de symétrie de la cheminée 32.
Les languettes 33 on une extrémité libre biseautée pour venir en prise avec un creux du filetage de la première partie filetée 21.
Cette venue en prise est réalisée par encliquetage, les languettes 33 étant élastiquement déformables et déployables. Ces languettes peuvent ainsi franchir les sommets des filets de la première partie 21 pour en final rester, par l'intermédiaire de leur extrémité libre biseautée, dans un creux du filetage de la première partie 21 et immobiliser le capot 30.
Ces languettes 33 sont donc des languettes d'encliquetage appartenant à des moyens de fixation par encliquetage d'un capot de protection sur un flasque d'un carter d'une machine électrique tournante.
Ces languettes 33 sont mieux visibles à la figure 3, qui est une vue de dessus du capot 30 du type de celui décrit dans le document US 6 798 094.

Dans cette figure 3 on voit en 31 le fond du capot 30. Ce fond 31 est doté d'une ouverture 35 de passage pour le connecteur associé au régulateur de tension, d'une ouverture 36 de passage pour la borne B+ de l'alternateur, d'ouvertures d'entrée d'air 37 pour la ventilation interne de l'alternateur, et d'ouvertures 38 pour ventilation du régulateur de tension.
On voit en 131 une partie en forme de dôme appartenant au fond 31 pour le logement du porte-balais et en 136 des murets bordant l'ouverture 36 pour blocage en rotation de l'oeillet d'extrémité du câble de liaison entre la borne B+ et la borne positive de la batterie du véhicule.
Ce fond 31 comporte également trois cheminées 32 d'assemblage équipées intérieurement de languettes 33 pour fixation du capot sur trois goujons solidaires du fond du palier arrière.
Chaque cheminée 32 est équipée de trois languettes 33 séparées les unes des autres par des fentes 39.
Les languettes 33 sont en forme de secteur annulaire.

Cette disposition donne satisfaction car elle est économique et évite une solution coûteuse consistant à prévoir un insert, par exemple en laiton, surmoulé dans le capot pour appui d'un écrou se vissant sur le goujon.

Néanmoins il est souhaitable de rendre encore plus fiable la cheminée d'assemblage à languettes d'encliquetage appartenant à des moyens de fixation par encliquetage du capot sur un organe solidaire d'un flasque d'un carter d'une machine électrique tournante.

### Résumé de l'invention

La présente invention a pour objet de répondre à ce souhait.

Suivant l'invention un capot de protection , destiné à être fixé par encliquetage sur un flasque d'une machine électrique tournante est caractérisé par la partie caractérisante de la revendication 1. Une machine électrique tournante, telle qu'un alternateur ou un alterno-démarreur, comprenant un flasque, au moins un organe solidaire du flasque et un capot de protection fixé par encliquetage sur l'organe solidaire du flasque, est caractérisée par la revendication 12.

Grâce à l'invention on allonge la languette d'encliquetage et on rend celle-ci plus souple en sorte que l'on rend plus fiable l'assemblage par encliquetage du capot avec le flasque du carter de la machine électrique tournante.
La durée de vie de la machine électrique tournante est donc augmentée.

Plus précisément la languette d'encliquetage est moins cassante dans la direction de l'axe de la cheminée, c'est-à-dire axialement, car elle appartient à une boucle de souplesse du fait qu'elle forme un crochet avec la cheminée à la faveur de la portion arrondie.
Cette portion arrondie favorise la souplesse de la languette d'encliquetage.
On appréciera que la solution est économique car elle consiste à modifier uniquement la cheminée d'assemblage du capot ; le reste de la machine électrique tournante n'étant pas modifié.
Ainsi on peut fixer par encliquetage le capot sur les goujons des figures 1 à 3 constituant les organes appartenant aux moyens d'encliquetage.

Dans un mode de réalisation le capot et la cheminée selon l'invention sont en matière plastique moulable pour obtenir aisément par moulage les formes souhaitées.

Dans un mode de réalisation la languette est inclinée vers l'extérieur du capot selon un angle compris entre 75° et 45° par rapport à la paroi de la cheminée.
Un bon résultat a été obtenu avec un angle globalement de 60°.

Dans un mode de réalisation chaque languette forme un crochet avec la paroi de la cheminée pour obtenir un meilleur résultat et augmenter encore la fiabilité de la fixation du capot avec le flasque de la machine électrique tournante.

Suivant une caractéristique la languette d'encliquetage présente dorsalement un talon destiné à venir en appui sur un épaulement de l'organe solidaire du flasque de la machine électrique tournante.
Ainsi dans un mode de réalisation l'épaulement est constitué par l'écrou du goujon des figures 1 et 2 en sorte que le talon est destiné à venir en appui sur l'écrou du goujon des figures 1 et 2.
L'extrémité libre de la languette, adjacente au talon, est ainsi bien maintenue.

Suivant une autre caractéristique la languette d'encliquetage se raccorde à la base de la cheminée par une portion arrondie pour favoriser la souplesse de la languette d'encliquetage.

Suivant une autre caractéristique la cheminée comporte intérieurement au moins un muret d'orientation radiale par rapport à l'axe de la cheminée.
Ce muret est destiné à venir en appui sur l'organe solidaire du flasque de la machine électrique tournante.

Dans un mode de réalisation ce muret est intercalé entre circonférentiellement entre les deux languettes.
Dans un mode de réalisation ce muret s'étend axialement au dessus des languettes et axialement au dessus d'une des fentes séparant les deux languettes.

Ce muret permet de filtrer les vibrations dans une direction perpendiculaire à l'axe de la cheminée, c'est-à-dire radialement. Il ménage ainsi les languettes.

A cet effet un faible jeu est prévu entre le muret et l'organe, tel qu'un goujon, solidaire du flasque de la machine électrique tournante.
On, améliore ainsi encore la fiabilité de la fixation du capot avec le flasque de la machine électrique tournante.
Le muret rigidifie également la cheminée.

Dans un mode de réalisation deux murets sont intercalés entre les deux languettes pour encore mieux filtrer les vibrations dans le sens radial.

En variante le capot est en tôle.

Toutes ces caractéristiques et modes de réalisation sont à considérer isolément ou en combinaison.

D'autres avantages apparaîtront à la lumière de la description qui va suivre et en référence aux dessins annexés.

### Brève description des dessins

- la figure 1 est une vue d'un goujon de l'art antérieur appartenant à des moyens de fixation par encliquetage d'un capot sur un flasque d'une machine électrique tournante ;
- la figure 2 est une vue partielle d'une cheminée d'assemblage à languettes déformables appartenant aux moyens de fixation par encliquetage d'un capot sur un flasque d'une machine électrique tournante ;
- la figure 3 est une vue de face d'un capot de l'art antérieur équipé de trois cheminées d'assemblage ;

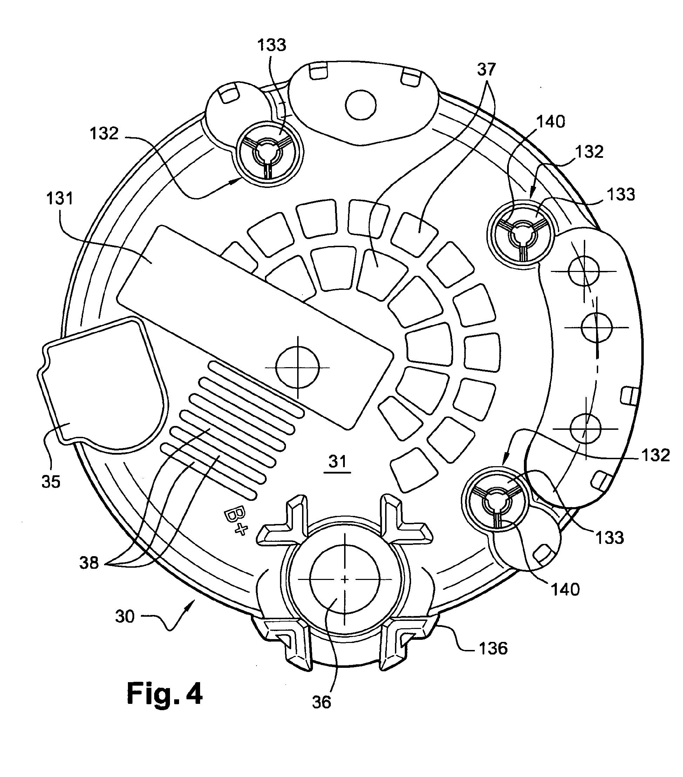

- la figure 4 est une vue analogue à la figure 3 d'un capot équipé de trois cheminées d'assemblage selon l'invention ;

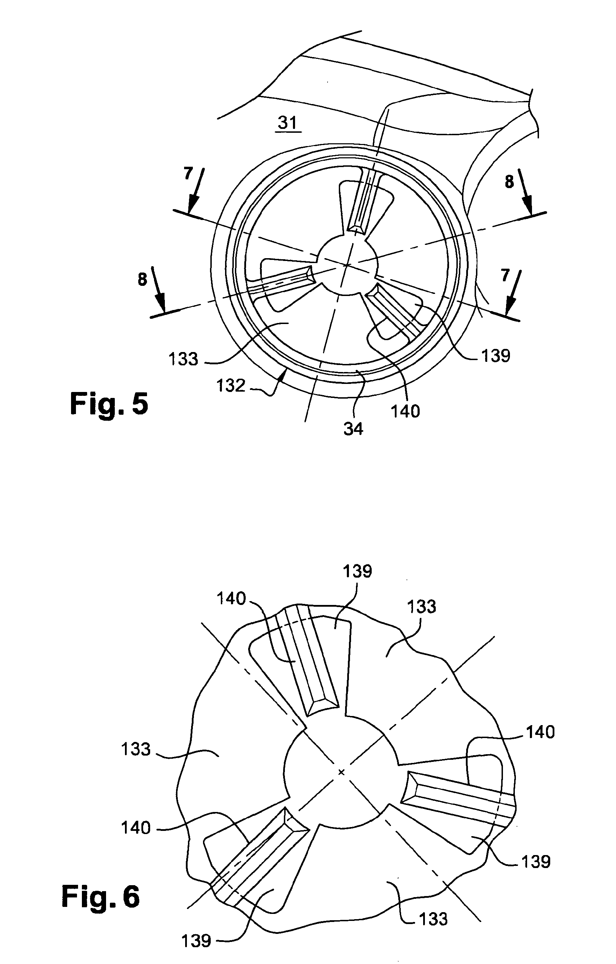

- la figure 5 est une vue à plus grande échelle de l'une des cheminées d'assemblage selon l'invention ;
- la figure 6 est une vue partielle de la figure 5 a plus grande échelle pour montrer les murets et les languettes déformables ;

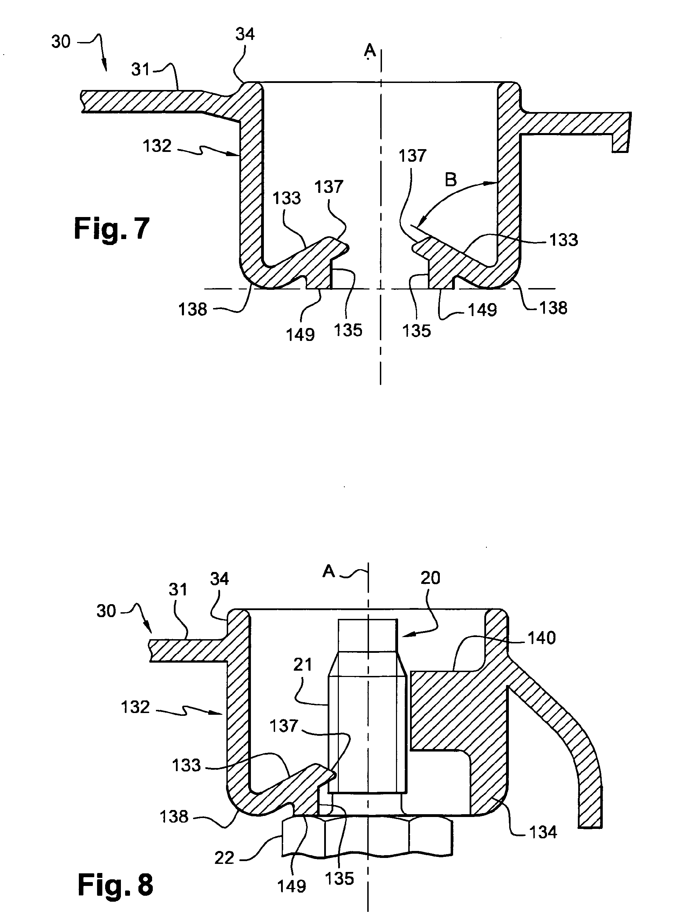

- la figure 7 est une vue en coupe selon la ligne 7-7 de la figure 5 ;
- la figure 8 est une vue en coupe selon la ligne 8-8 de la figure 5 ;

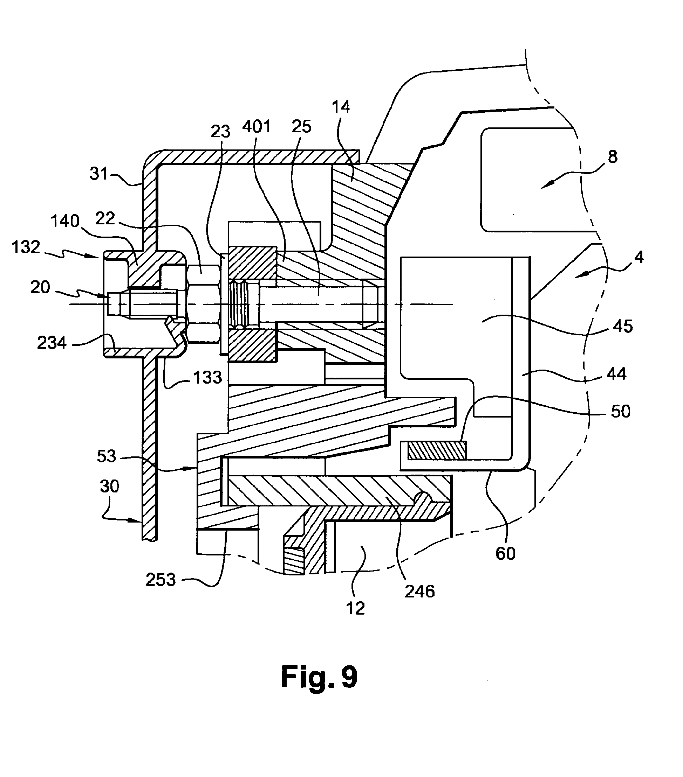

- la figure 9 est une vue analogue à la figure 12 du document WO 01/69762 avec un capot équipé d'une cheminée d'assemblage selon l'invention.

### Description d'exemples de réalisation de l'invention

Dans la description les éléments analogues ou similaires seront affectés des mêmes signes de référence.

Dans le mode de réalisation de la figure 4 on a remplacé les cheminées d'assemblage de la figure 3 par des cheminées d'assemblage 132 selon l'invention.
Dans cette réalisation on recherche à augmenter la fiabilité de la fixation par encliquetage du capot 30 sur des organes, ici les goujons des figures 1 et 2, solidaires de l'un des flasques, ici le palier arrière, que comporte le carter de la machine électrique tournante, ici un alternateur à ventilation interne de véhicule automobile à moteur thermique comme à la figure 3.
Le nombre de cheminées d'assemblage 132 est égal à trois dans ce mode de réalisation.
Ces cheminées 132 sont réparties comme à la figure 3.
Ces cheminées 132 sont solidaires du fond 31 du capot 30 et s'étendent perpendiculairement à ce fond comme les cheminées 32. Les cheminées 132 présentent une paroi définissant la cheminée.
Ce capot 30 est dans ce mode de réalisation en matière plastique moulable, en sorte que les cheminées 132 sont venues de moulage de manière aisée avec le fond 31 du capot 30 et sont d'un seul tenant avec celui-ci.
Comme mieux visible dans les figures 7 et 8 les cheminées 132 s'étendent à l'intérieur du capot de forme creuse comme dans la figure 3 et dans la figure 7 du document US 6 798 094 précité.

Les cheminées 132 sont globalement de forme cylindrique et présentent, comme à la figure 2, une tête 34 en forme d'anneau , qui s'étend en saillie axiale vers l'extérieur par rapport au fond 31 comme visible dans les figures 5, 7 et 8. Les parois des cheminées sont donc ici globalement en forme de manchon cylindrique.
L'axe de symétrie axial d'une cheminée 132 est confondu avec l'axe A du goujon 20 comme visible à la figure 8.

Chaque cheminée d'assemblage 132 et donc chaque paroi de la cheminée, est équipée intérieurement de trois languettes 133 élastiquement déformables réparties circonférentiellement à 120° les unes par rapport aux autres.

Les languettes 133 sont dans ce mode de réalisation identiques et séparées les unes des autres par des fentes 139 borgnes débouchantes centralement comme les fentes 39.

La répartition des fentes 139 et des languettes 133 est circonférentiellement régulière.

Suivant une caractéristique au moins une languette 133 d'une cheminée d'assemblage 132 présente une boucle de souplesse.

Ici toutes les languettes 133 présentent une boucle de souplesse du fait que les languettes 133 sont identiques et sont ici globalement en forme de secteur annulaire.

Cette boucle de souplesse est obtenue, selon une caractéristique, en inclinant la languette 133 par rapport à l'axe axial de symétrie A de la cheminée.

La languette 133 est dirigée vers l'extérieur du capot, c'est-à-dire en direction de l'extrémité supérieure de la cheminée délimitée par la tête 34 de la cheminée.

La languette 133 est ainsi plus longue, plus souple et moins cassante que la languette 33 de la figure 2, qui s'étend radialement, c'est-à-dire perpendiculairement à l'axe A.
La fixation du capot 30 est ainsi plus fiable.

Cette languette 133 présente une extrémité libre biseautée 137 pour coopérer avec la première partie filetée 21 du goujon 20, qui pénètre dans la cheminée.
Comme à la figure 2, l'extrémité 137 est destinée à venir en prise avec un creux du filetage de la partie 21.
La languette 133 est élastiquement déformable. Elle est déployable pour franchir les sommets des filets du filetage de la partie 21 et rester en final dans un creux du filetage de la partie filetée 21 lors de l'opération d'encliquetage du capot 30 sur les goujon 20.
La partie 137 a dans un mode de réalisation une forme complémentaire à celle d'un creux du filetage de la partie 21 pour un meilleur accrochage.
Le profil de l'extrémité 137 est donc ici globalement de forme triangulaire

La languette 133 est raccordée, selon une autre caractéristique, à la cheminée 132, c'est-à-dire à la paroi de celle-ci, par une portion arrondie 138 donnant de la souplesse à la languette 133 et la rendant moins cassante.
La languette 133 forme un angle B avec la paroi de la cheminée comme visible à la figure 7. Cet angle est compris entre 75° et 45°.

De bons résultats ont été obtenus lors d'essais avec un angle globalement égal à 60°.

Il en résulte que selon une caractéristique la languette 133 forme un crochet avec la paroi de la cheminée 132.

Selon une autre caractéristique la portion 138 raccorde la languette à l'extrémité inférieure de la cheminée 132, c'est-à-dire à la base de celle -ci située à l'intérieur du capot.

La base de la cheminée 132 n'est plus en appui sur l'écrou 22.
Cet appui est réalisé à l'aide d'un talon 135, que présente dorsalement la languette133. Ce talon est venu de moulage avec la languette 133.
Le talon 135 est intercalé entre l'extrémité 137 et la portion 138 constituant une portion d'enracinement de la languette 133 à la base de la cheminée 132. Ce talon 135 est donc proche de l'axe A. La taille de l'écrou 22 peut être réduite.
La face inférieure149 du talon est destinée à venir en appui sur la face supérieure de l'écrou 22. Ainsi la languettes 133 est bien immobilisée en final car elle est en prise par son extrémité 137 avec le filetage de la partie 21 et est en appui par la face inférieure 149 de son talon 132 avec l'écrou 22.
On obtient ainsi une fixation robuste et fiable du capot 30.
La languette 133, dotée d'une extrémité libre biseautée 137 et d'un talon 135 adjacent à cette extrémité libre 137, constitue globalement l'extrémité d'un hameçon.

Comme visible dans les figures 5, 6 et 8 la cheminée 132 comporte intérieurement au moins un muret 140 d'orientation radiale par rapport à l'axe A de la cheminée 132.
Le muret 140 est intercalé circonférentiellement entre deux languettes 132. Ce muret 140 fait saillie radialement dans l'espace séparant les languettes 133 les unes des autres.
Il est ainsi prévu dans ce mode de réalisation trois murets 140 d'orientation radiale.

Un faible jeu existe entre l'extrémité libre des murets et la périphérie externe partie filetée 21.
Cette disposition permet de bien maintenir radialement le capot 30 et notamment de bien résister aux phénomènes de vibrations radiales. Cela permet de ménager les languettes 133 et d'améliorer encore la fiabilité de la fixation du capot sur le flasque de la machine électrique tournante.
Les murets 140 s'étendent axialement au dessus des fentes 139 séparant les languettes les unes des autres. Ces murets 140 sont venus de moulage avec la paroi de la cheminée 132.
Ils s'étendent axialement au dessus des languettes 133.
La forme des fentes 139, comportant un fond doté d'une partie plane intercalée entre deux parties inclinées (figure 6), permet d'obtenir aisément les murets et les languettes par moulage.
Ces murets 140 consistent en une bande de matière globalement de section rectangulaire de grande hauteur axiale fonction de la hauteur axiale de la partie 21.
La position angulaire des murets 140, implantés au-dessus des fentes, permet de ne pas altérer la souplesse des languettes.

En variante les murets 140 sont décalés circonférentiellement par rapport aux fentes 139.
Pour ce faire il faut modifier le moule, ce qui rend celui-ci plus compliqué. Néanmoins dans un mode de réalisation les murets peuvent s'étendre au-dessus la partie médiane des languettes.

Les murets rigidifient la cheminée.

Bien entendu en variante on peut augmenter la hauteur de la tête de la cheminée comme visible en 234 à la figure 9. Dans cette figure on a repris les mêmes références que dans la figure 12 du document WO 01/69762 auquel on se reportera. Ainsi on voit en 14 le flasque, ici le palier arrière, du carter de l'alterno-démarreur, en 401 le plot du palier 14, fileté intérieurement pour vissage de la partie filetée 25 du goujon 20, et en 44 le ventilateur solidaire du rotor 4.
Le palier 14 est ici en matière moulable. Il est en aluminium.
Le plot 401 est donc obtenu aisément par moulage.

La cheminée 132 des figures 4 à 9 est de forme cylindrique à section circulaire. En variante la section de la cheminée cylindrique est rectangulaire. Cette section peut être carrée. En variante la cheminée a une autre forme. Dans tous les cas l'axe de symétrie axial de la cheminée s'étend perpendiculairement au fond 31.

Bien entendu la présente invention n'est pas limitée aux exemples de réalisation décrits.
Ainsi le nombre de cheminées 132 dépend des applications et notamment de la taille de la machine électrique tournante. Ce nombre peut être égal à un, deux ou supérieur à trois, par exemple quatre ou six.
Par exemple lorsque le capot n'est pas soumis à de fortes sollicitations, notamment vibratoires, on peut prévoir une ou deux cheminées 132.
Le capot 30 comporte donc au moins une cheminée d'assemblage 132 à languettes d'encliquetage 133.

Les cheminées 132 d'un même capot n'ont pas forcément la même taille ; l'une au moins des cheminées 132 pouvant être de taille inférieure à celles des autres cheminées. Cela dépend notamment de la place disponible au niveau du fond 31 du capot 30 et donc de l'implantation des cheminées 132.

Le nombre de languettes 133 et de murets 140 par cheminée 132 dépend également des applications et notamment de la taille de la machine électrique tournante et du nombre de cheminées 132.
Ainsi dans un autre mode de réalisation il est prévu deux languettes 133 et deux murets 140 par cheminée 132. Dans encore d'autres modes de réalisation ce nombre est égal à quatre ou à six.

Toutes les combinaisons sont possibles.

Ainsi les cheminées 132 d'un même capot 30 non pas forcément le même nombre de murets 140 et de languettes 133.
Par exemple une au moins des cheminées 132 peut avoir un nombre de languettes 133 et de murets 140 différent des autres cheminées 132.
En variante une au moins des cheminées 132 d'un même capot 30 peut être dépourvue de muret 140.

Dans encore une autre variante le capot est équipé d'au moins une cheminée 32 de la figure 2 ,en sorte que les cheminées d'assemblage d'un même capot ne sont pas forcément du même type.
Par exemple l'une au moins des cheminées 132 de la figure 4 peut être remplacée par une cheminée 32 de la figure 3.

Dans encore un autre mode de réalisation le nombre de murets 140 par cheminée 132 n'est pas forcément égal au nombre de languettes 133. Par exemple dans une configuration à quatre languettes 133 on peut prévoir qu'un seul muret ou deux murets 140 diamétralement opposés.
Tout dépend également du nombre de cheminées d'assemblage.
Les languettes d'encliquetage 133 d'une même cheminée 132 n'ont pas forcément la même longueur circonférentielle, notamment lorsque le nombre de languettes par cheminée 132 est égal à quatre ou six.
Dans ces cas les languettes 133 peuvent appartenir à deux séries de languettes alternant de manière circonférentielle; l'une des séries étant dotée de languettes 133 de longueur circonférentielle supérieure à celle des languettes 133 de l'autre série.
La présence des murets 140 n'est pas forcément obligatoire.
Les languettes 133 peuvent être combinées avec les languettes 33 de la figure 2.
Ainsi dans un mode de réalisation à quatre languettes réparties circonférentiellement de manière régulière il est prévu une languette 33 entre deux languettes 133 consécutives avec ou sans présence de murets 140. Dans une configuration à trois languettes il est prévu une ou deux languettes 132

Le goujon 20 n'a pas forcément une double fonction. En effet le goujon 20 assure également par l'intermédiaire de sa rondelle 23 une autre fonction à savoir le maintien du porte capteur dans le cas du document WO 01/69762 et le maintien du connecteur et du radiateur positif dans le cas des documents US 6 798 094 et US 7 019 424.
En variante ce goujon peut être dédié uniquement à la fonction d'encliquetage du capot.
En variante on peut remplacer ce goujon 20 par un boulon se vissant par exemple dans le plot 401 du palier arrière 14 de l'alterno-démarreur de la figure 9. Dans ce cas il faut prévoir un chambrage dans la face interne du palier 14 pour loger la tête de la vis du boulon et éviter toute interférence avec les pales 45 du ventilateur 44.
Les languettes coopèrent dans ce cas avec l'extrémité filetée de la vis du boulon.
On peut également utiliser une vis à tige filetée vissée dans le plot 401 prolongé pour servir de surface d'appui aux talons 135 lorsque l'unique fonction à réaliser est la fixation du capot 30.
On peut dans ce cas ne pas percer le plot 401 mais prolonger celui-ci par une partie filetée ou à anneaux de retenus, du type des anneaux 24 de la figure 1, pour venue en prise des extrémités libres des languettes 133. L'organe solidaire du flasque peut donc être constitué par un plot avantageusement venu de moulage avec le flasque.

Les languettes 133 ne coopèrent donc pas forcément avec un goujon. L'organe solidaire du flasque du carter de la machine électrique tournante et appartenant aux moyens d'encliquetage de fixation du capot n'est donc pas forcément un goujon. Cet organe pénètre dans la cheminée et comporte dans tous les cas des crans et des creux pour la réception des extrémités libres des languettes.

Les creux et les crans appartiennent à un filetage ou à des anneaux ou tout autre forme de réalisation.
De même en variante les talons s'appuient sur un épaulement appartenant à un plot du palier arrière.

Le capot n'est pas forcément de forme creuse. Il peut consister dans un autre mode de réalisation en un simple couvercle en appui sur un rebord du flasque concerné de la machine électrique tournante.
Cette machine en variante peut être refroidie par circulation d'un fluide à l'intérieur d'au moins un flasque de son carter

Ce flasque est en variante le palier avant.

La machine électrique tournante est en variante un moteur électrique.

En variante le capot est en tôle.

En variante on peut augmenter la souplesse des languettes en prolongeant la portion 138 par une bande de matière découpée dans la paroi de la cheminée.

Ainsi qu'il ressort à l'évidence de la description et des dessins grâce à l'invention on réduit les usures des languettes et les risques d'arrachement des languettes. En outre les déplacements du capot sont réduits ainsi que les bruits grâce notamment à la souplesse des languettes.
La solution est fiable, simple économique et robuste.
En variante les cheminées ont une autre forme, telle que tronconique.

## Revendications

1. Capot de protection, destiné à être fixé par encliquetage sur un flasque d'une machine électrique tournante, du type comportant au moins une cheminée d'assemblage (132) présentant un axe axial de symétrie (A) et dotée intérieurement d'au moins deux languettes d'encliquetage (133, 33) élastiquement déformables destinées à appartenir à des moyens de fixation par encliquetage du capot sur un organe (20), d'une part, doté de crans et de creux, et d'autre part, solidaire d'un flasque d'une machine électrique tournante, les dites languettes étant destinées à venir en prise avec un creux de l'organe de fixation (20) destiné à pénétrer dans la cheminée d'assemblage (132), **caractérisée en ce qu'**au moins une languettes d'encliquetage (133) est inclinée par rapport à l'axe (A) de la cheminée (132) et est dirigée vers l'extérieur du capot en sorte qu'elle forme un crochet avec la paroi de la cheminée et **en ce que** ladite languette se raccorde à la cheminée (132) par une portion arrondie (138).

2. Capot selon la revendication 1, **caractérisé en ce que** la languette (132) est inclinée vers l'extérieur du capot selon un angle compris entre 75° et 45° par rapport à la paroi de la cheminée (132).

3. Capot selon la revendication 2, **caractérisé en ce que** la languette (132) est inclinée vers l'extérieur du capot selon un angle globalement de 60° par rapport à la paroi de la cheminée (132).

4. Capot selon l'une quelconque des revendications précédentes, **caractérisé en ce que** la languette (133) présente dorsalement un talon (135) destiné à venir en appui sur un épaulement (22) solidaire du flasque de la machine électrique tournante.

5. Capot selon l'une quelconque des revendications précédentes, **caractérisé en ce que** la languette (133) se raccorde à la base de la cheminée (132) par la portion arrondie (138) prolongée par une bande de matière découpée dans la paroi de la cheminée (132).

6. Capot selon l'une quelconque des revendications précédentes, **caractérisé en ce que** la cheminée (132) comporte intérieurement au moins un muret (140) d'orientation radiale par rapport à l'axe (A) de la cheminée et destiné à venir en appui sur l'organe (20) solidaire du flasque de la machine électrique tournante.

7. Capot selon la revendication 7, **caractérisé en ce que** les languettes (133, 33) sont séparées par des fentes (139) et **en ce que** le muret (140) s'étend axialement au dessus d'une des fentes (139).

8. Capot selon la revendication 7, **caractérisé en ce qu'**il comporte un muret (140) au dessus de chaque fente (139).

9. Capot selon l'une quelconque des revendications précédentes, **caractérisé en ce que** les languettes (133) sont identiques.

10. Capot selon la revendication 9 prise en combinaison avec la revendication 8, **caractérisé en ce que** la cheminée (132) comporte circonférentiellement trois languettes (133) identiques, séparées les unes des autres par des fentes (139) identiques, et trois muret (140) implantés chacun au dessus d'une des fentes (139) en étant réparties circonférentiellement à 120°.

11. Capot selon l'une quelconque des revendications précédentes, **caractérisé en ce que** le capot (30) et sa ou ses cheminées (132) à languettes d'encliquetage (133, 33) sont en matière plastique moulable.

12. Machine électrique tournante, telle qu'un alternateur ou un alterno-démarreur, comprenant un flasque, au moins un organe (20) ), d'une part, doté de crans et de creux, et d'autre part, solidaire du flasque et un capot (30) de protection selon l'une quelconque des revendications 1 à 11 fixé par encliquetage sur l'organe (20) solidaire du flasque, telle que le capot (30) présente une cheminée (132) à languettes d'encliquetage (133), et que l'organe (20) solidaire du flasque pénètre dans la cheminée et en ce que les languettes (133) coopèrent par leur extrémité libre (137) avec un creux de l'organe (20) solidaire du flasque.

13. Machine selon la revendication 12, **caractérisée en ce que** l'organe (20) consiste en un goujon comportant une première partie filetée (21) et **en ce que** les languettes 133) coopèrent par leur extrémité libre (137) avec la première partie filetée (21) du goujon (20).

14. Machine selon la revendication 13, **caractérisée en ce que** chaque languette (133) comporte une extrémité libre (137) biseautée destinée à venir en prise avec un creux du filetage de la première partie filetée (21) du goujon (20).

15. Machine selon la revendication 13 ou 14 prise en combinaison avec la revendication 5, **caractérisée en ce que** le goujon (20) comporte un écrou (22) en dessous de sa première partie filetée (21) et **en ce que** la face inférieure (149) du talon (134) est destinée à venir en appui sur la face supérieure de l'écrou (22) du goujon (20).

## Claims

1. Protective cover designed to be attached by snap fitting to a flange of a rotating electric machine, of the type including at least one assembly tube (132) having an axial axis of symmetry (A) and having at least two resiliently deformable internal snap-fitting tabs (133, 33) designed to form part of means for attaching the cover by snap fitting on to a member (20) which is, on the one hand, provided with notches and recesses, and is, on the other hand, fixed to a flange of a rotating electric machine, the tabs being designed to engage with a recess of the attachment member (20) designed to penetrate into the assembly tube (132), **characterized in that** at least one snap-fitting tab (133) is inclined relative to the axis (A) of the tube (132) and is directed towards the outside of the cover in such a way that it forms a hook with the wall of the tube, and **in that** the tab is connected to the tube (132) by a rounded portion (138).

2. Cover according to Claim 1, **characterized in that** the tab (133) is inclined towards the outside of the cover at an angle of between 75° and 45° relative to the wall of the chimney (132).

3. Cover according to Claim 2, **characterized in that** the tab (133) is inclined towards the outside of the cover at an overall angle of 60° relative to the wall of the chimney (132).

4. Cover according to any one of the preceding claims, **characterized in that** the tab (133) has in a dorsal position a heel (135) designed to bear on a shoulder (22) fixed to the flange of the rotating electric machine.

5. Cover according to any one of the preceding claims, **characterized in that** the tab (133) is connected to the base of the tube (132) by the rounded portion (138) extended by a strip of material cut from the wall of the tube (132).

6. Cover according to any one of the preceding claims, **characterized in that** the tube (132) has at least one internal wall (140) which is used for radial orientation relative to the axis (A) of the tube and which is designed to bear on the member (20) fixed to the flange of the rotating electric machine.

7. Cover according to Claim 6, **characterized in that** the tabs (133, 33) are separated by gaps (139) and **in that** the wall (140) extends axially above one of the gaps (139).

8. Cover according to Claim 7, **characterized in that** it includes a wall (140) above each gap (139).

9. Cover according to any one of the preceding claims, **characterized in that** the tabs (133) are identical.

10. Cover according to Claim 9, considered in combination with Claim 8, **characterized in that** the tube (132) includes on its circumference three identical tabs (133) separated from each other by identical gaps (139), and three walls (140) each based above one of the gaps (139) and distributed circumferentially at intervals of 120°.

11. Cover according to any one of the preceding claims, **characterized in that** the cover (30) and its tube or tubes (132) with snap-fitting tabs (133, 33) are made of mouldable plastic material.

12. Rotating electric machine, such as an alternator or a starter-alternator, comprising a flange, at least one member (20) which is, on the one hand, provided with notches and recesses, and is, on the other hand, fixed to the flange, and a protective cover (30) according to any one of Claims 1 to 11, which is attached by snap fitting to the member (20) fixed to the flange, such that the cover (30) has a tube (132) with snap-fitting tabs (133) and that the member (20) fixed to the flange penetrates into the tube, and that the tabs (133) interact at their free ends (137) with a recess in the member (20) fixed to the flange.

13. Machine according to Claim 12, **characterized in that** the member (20) is composed of a pin having a first threaded part (21) and **in that** the tabs (133) interact at their free ends (137) with the first threaded part (21) of the pin (20).

14. Machine according to Claim 13, **characterized in that** each tab (133) has a bevelled free end (137) designed to engage with a recess in the thread of the first threaded part (21) of the pin (20).

15. Machine according to Claim 13 or 14, considered in combination with Claim 5, **characterized in that** the pin (20) includes a nut (22) under its first threaded part (21) and **in that** the lower face (149) of the heel (134) is designed to bear on the upper face of the nut (22) of the pin (20).

## Patentansprüche

1. Schutzhaube, die dazu bestimmt ist, durch Einrasten auf einem Flansch einer drehenden elektrischen Maschine befestigt zu werden, von der Art, die mindestens einen Montageschacht (132) aufweist, der eine axiale Symmetrieachse (A) hat und innen mit mindestens zwei elastisch verformbaren Einrastzungen (133, 33) versehen ist, die dazu bestimmt sind, zu Einrichtungen zur Rastbefestigung der Haube auf einem Element (20) zu gehören, das einerseits mit Raststufen und Vertiefungen versehen und andererseits fest mit einem Flansch einer drehenden elektrischen Maschine verbunden ist, wobei die Zungen dazu bestimmt sind, mit einer Vertiefung des Befestigungselements (20) in Eingriff zu kommen, das dazu bestimmt ist, in den Montageschacht (132) einzudringen, **dadurch gekennzeichnet, dass** mindestens eine Einrastzunge (133) bezüglich der Achse (A) des Schachts (132) geneigt und zur Außenseite der Haube gerichtet ist, so dass sie mit der Wand des Schachts einen Haken bildet, und dass die Zunge durch einen abgerundeten Abschnitt (138) an den Schacht (132) anschließt.

2. Haube nach Anspruch 1, **dadurch gekennzeichnet, dass** die Zunge (133) gemäß einem Winkel zwischen 75° und 45° bezüglich der Wand des Schachts (132) zur Außenseite der Haube geneigt ist.

3. Haube nach Anspruch 2, **dadurch gekennzeichnet, dass** die Zunge (133) gemäß einem Winkel von global 60° bezüglich der Wand des Schachts (132) zur Außenseite der Haube geneigt ist.

4. Haube nach einem der vorhergehenden Ansprüche, **dadurch gekennzeichnet, dass** die Zunge (133) am Rücken einen Absatz (135) hat, der dazu bestimmt ist, auf einer fest mit dem Flansch der drehenden elektrischen Maschine verbundenen Schulter (22) in Auflage zu kommen.

5. Haube nach einem der vorhergehenden Ansprüche, **dadurch gekennzeichnet, dass** die Zunge (133) an die Basis des Schachts (132) durch den abgerundeten Abschnitt (138) anschließt, der von einem Band aus in der Wand des Schachts (132) ausgeschnittenem Material verlängert wird.

6. Haube nach einem der vorhergehenden Ansprüche, **dadurch gekennzeichnet, dass** der Schacht (132) innen mindestens eine halbhohe Trennwand (140) radialer Ausrichtung bezüglich der Achse (A) des Schachts aufweist, die dazu bestimmt ist, auf dem fest mit dem Flansch der drehenden elektrischen Maschine verbundenen Element (20) in Auflage zu kommen.

7. Haube nach Anspruch 6, **dadurch gekennzeichnet, dass** die Zungen (133, 33) durch Schlitze (139) getrennt werden, und dass die halbhohe Trennwand (140) sich axial über einem der Schlitze (139) erstreckt.

8. Haube nach Anspruch 7, **dadurch gekennzeichnet, dass** sie eine halbhohe Trennwand (140) über jedem Schlitz (139) aufweist.

9. Haube nach einem der vorhergehenden Ansprüche, **dadurch gekennzeichnet, dass** die Zungen (133) gleich sind.

10. Haube nach Anspruch 9 in Kombination mit 8, **dadurch gekennzeichnet, dass** der Schacht (132) am Umfang drei gleiche Zungen (133), die voneinander durch gleiche Schlitze (139) getrennt sind, und drei halbhohe Trennwände (140) aufweist, die je über einem der Schlitze (139) eingesetzt sind, indem sie in einem Umfangsabstand von 120° verteilt sind.

11. Haube nach einem der vorhergehenden Ansprüche, **dadurch gekennzeichnet, dass** die Haube (30) und ihr Schacht oder ihre Schächte (132) mit Einrastzungen (133, 33) aus formbarem Kunststoff sind.

12. Drehende elektrische Maschine, wie ein Wechselstromgenerator oder ein Starter-Generator, die einen Flansch, mindestens ein Element (20), das einerseits mit Raststufen und Vertiefungen ausgestattet und andererseits fest mit dem Flansch verbunden ist, und eine Schutzhaube (30) nach einem der Ansprüche 1 bis 11 enthält, die durch Einrasten am fest mit dem Flansch verbundenen Element (20) befestigt ist, derart, dass die Haube (30) einen Schacht (132) mit Einrastzungen (133) aufweist und das fest mit dem Flansch verbundene Element (20) in den Schacht eindringt, und dass die Zungen (133) über ihr freies Ende (137) mit einer Vertiefung des fest mit dem Flansch verbundenen Elements (20) zusammenwirken.

13. Maschine nach Anspruch 12, **dadurch gekennzeichnet, dass** das Element (20) aus einem Bolzen besteht, der einen ersten Gewindebereich (21) aufweist, und dass die Zungen (133) über ihr freies Ende (137) mit dem ersten Gewindebereich (21) des Bolzens (20) zusammenwirken.

14. Maschine nach Anspruch 13, **dadurch gekennzeichnet, dass** jede Zunge (133) ein abgeschrägtes freies Ende (137) aufweist, das dazu bestimmt ist, mit einer Vertiefung des Gewindes des ersten Gewindeteils (21) des Bolzens (20) in Eingriff zu kommen.

15. Maschine nach Anspruch 13 oder 14 in Kombination mit Anspruch 5, **dadurch gekennzeichnet, dass** der Bolzen (20) eine Mutter (22) unter seinem ersten Gewindebereich (21) aufweist, und dass die Unterseite (149) des Absatzes (134) dazu bestimmt ist, auf der Oberseite der Mutter (22) des Bolzens (20) in Auflage zu kommen.
